# EUROPÄISCHE PATENTSCHRIFT

(11) **EP 1 454 816 B1**
(45) Veröffentlichungstag und Bekanntmachung des Hinweises auf die Patenterteilung: **21.05.2008**
(21) Anmeldenummer: 04004934.8
(22) Anmeldetag: 03.03.2004
(51) Int. Cl.: B62D 21/02

(54) **Tragstruktur eines Kraftfahrzeugs**
Chassis frame
Structure de chassis

(30) Priorität: 04.03.2003 DE 10309629
(43) Veröffentlichungstag der Anmeldung: 08.09.2004
(73) Patentinhaber: AUDI AG, 85045 Ingolstadt (DE)
(72) Erfinder: Schretzlmeier, Werner, 74235 Erlenbach (DE); Kappler, Armin, 74226 Nordheim (DE); Kruse, Martin, 68789 St.Leon-Rot (DE); Grosser, Ralf, 74235 Erlenbach (DE)
(74) Vertreter: Patzelt, Heike Anna Maria

(56) Entgegenhaltungen:
- EP-A2- 1 093 995
- GB-A- 1 025 867
- US-A- 2 636 774
- US-A- 4 840 423
- US-A1- 2002 195 840
- US-A1- 2003 189 358

## Beschreibung

Die Erfindung betrifft eine Tragstruktur eines Kraftfahrzeugs mit einer Fronttragstruktur und einer Bodentragstruktur gemäß dem Oberbegriff des patentanspruchs 1.

Die Tragstruktur der Karosserie eines Kraftfahrzeuges kann in die Fronttragstruktur, die Bodentragstruktur und die Hecktragstruktur unterteilt werden. Dabei ermöglicht der Fahrzeugbau die Fertigung der gesamten Tragstruktur aus Aluminium, wobei Bleche, Stangenpressprofile und Gussteile verwendet werden.

Die Fronttragstruktur, die Bodentragstruktur und die Hecktragstruktur eines Kraftfahrzeugs weisen in der Regel jeweils mindestens zwei Längsträger auf, die über Querträger miteinander verbunden sind. Die Verbindung zwischen der Fronttragstruktur und der Bodentragstruktur erfolgt beispielsweise so, dass die Längsträger der Fronttragstruktur und die Längsträger der Bodentragstruktur über mehrere, durch zwei vertikale Fußraumträger miteinander verbundene Querträger der vorderen Fahrgastzelle miteinander verbunden sind. Dabei weist die Bodentragstruktur eines Kraftfahrzeugs in der Regel mehrere miteinander verbundene Längsträger auf, beispielsweise sind die als Schweller bezeichneten äußeren Längsträger mit vorderen Längsträgern verbunden, welche die vorderen Radhäuser begrenzen.

In der Druckschrift EP 1 093 995 ist gemäß dem Oberbegriff des Anspruchs 1, ein solcher zwischen Längsträgern angeordneter Querträger beschrieben, der in dem Bereich angeordnet ist, in dem beim fertig montierten Kraftfahrzeug die Pedalerie angeordnet ist. Dieser Querträger wird im Folgenden als Querträger Pedalerie bezeichnet.

Einem Kraftfahrzeug mit Mittelmotor oder Heckmotor steht bei einem Frontalzusammenstoß die Brennkraftmaschine als Blockbildungselement zur Energieabsorption nicht zur Verfügung

Daraus entsteht die Notwendigkeit die Fronttragstruktur und die Bodentragstruktur des Kraftfahrzeuges so auszugestalten, dass die Fronttragstruktur besonders viel Aufprallenergie absorbieren kann, ohne dass die Bodentragstruktur stark verformt wird.

Der Erfindung liegt die Aufgabe zugrunde, die Tragstruktur eines Kraftfahrzeugs mit einer zwei Frontlängsträger aufweisenden Fronttragstruktur gemäß dem Oberbegriff des Patentanspruchs 1 anzugeben, die eine hohe Energieabsorption aufweist, die auftretende Kräfte gleichmäßig auf die Bodentragstruktur und die Hecktragstruktur überträgt, die das Ausbilden eines volumenreichen Gepäckraumes ermöglicht, und die zudem kostengünstig herzustellen ist.

Diese Aufgabe wird erfindungsgemäß durch das Merkmal im Kennzeichen des Patentanspruchs 1 gelöst, wonach die zwei Enden aufweisende Seite des ypsilonförmigen Frontlängsträgers mit dem Querträger Pedalerie verbunden ist.

Der mit dem Querträger Stirnwand verbundene, der Fahrzeugaußenseite zugewandte Teil der ypsilonförmigen Frontlängsträger bildet den Längsträger Radhaus. Der Längsträger Radhaus wird von einem sehr soliden Gussteil gebildet, das zur Befestigung eines Querlenkers der Radaufhängung des Kraftfahrzeugs vorgesehen ist.

Als weitere Querträger sind zwischen der Fronttragstruktur und der Bodentragstruktur des Kraftfahrzeugs ein Querträger Stirnwand und ein Querträger Frontscheibe ausgebildet, die zu beiden Seiten des Kraftfahrzeugs zusammen mit dem Querträger Pedalerie durch die zwei vertikale Fußraumträger miteinander verbunden sind.

Die Fronttragstruktur weist neben den zwei ypsilonförmigen Frontlängsträgern zwei untere Frontlängsträger und zwei äußere Frontlängsträger auf, wobei die zwei unteren Frontlängsträger mit dem Querträger Stirnwand und die zwei äu-ßeren Frontlängsträger mit dem Querträger Frontscheibe verbunden sind.

Die Bodentragstruktur ist im Wesentlichen aus einem Tunnel, zwei Schwellern, den zwei vorderen Längsträgern und zwei hinteren Querträgern aufgebaut. Dabei ist der Tunnel aus einem Tunneldeckenträger, zwei Tunnelträgern und zwei Tunnelschließblechen aufgebaut. Während der Tunneldeckenträger mit dem Querträger Pedalerie verbunden ist, sind die Tunnelträger und die zwei vorderen Längsträger miteinander und mit dem Querträger Stirnwand verbunden.

In einer Weiterbildung der Erfindung ist vorgesehen, dass die Brennkraftmaschine als Sportwagen ausgebildet ist, wobei die Brennkraftmaschine im Heck des Sportwagens angeordnet und das Fahrwerk des Sportwagen als Allradantrieb ausgebildet ist.

In einer letzten vorteilhaften Ausgestaltung der Erfindung ist vorgesehen die gesamte Tragstruktur des Kraftfahrzeugs aus Leichtmetall herzustellen.

Eine derartig ausgebildete Fronttragstruktur weist durch die ypsilonförmigen Frontlängsträger eine hohe Energieabsorption auf, wobei auftretende Kräfte gleichmäßig auf die Bodentragstruktur und die Hecktragstruktur übertragen werden.

Im Folgenden soll die Tragstruktur eines Kraftfahrzeugs anhand von einem Ausführungsbeispiel im Zusammenhang mit zwei Figuren dargestellt und erläutert werden.

Es zeigen:
- Figur 1: eine Frontansicht der sechs Frontlängsträger aufweisenden Fronttragstruktur, wobei zwei Frontlängsträger ypsilonförmig ausgebildet sind,
- Figur 2: eine Seitenansicht der Fronttragstruktur mit dem als Gussteil gefertigten Längsträger Radhaus.

Die Tragstruktur der Karosserie eines Kraftfahrzeuges kann in die Fronttragstruktur, die Bodentragstruktur und die Hecktragstruktur unterteilt werden. Der Fahrzeugbau ermöglicht die Fertigung der gesamten Karosserie aus Aluminium, wobei Bleche, Stangenpressprofile und Gussteile verwendet werden.

Bei einem als Sportwagen ausgelegten Kraftfahrzeug mit einer im Heck angeordneten Brennkraftmaschine und einem Fahrwerk mit Allradantrieb ist im Bereich der Fahrgastzelle in der Bodentragstruktur ein die Antriebswelle umfassender Tunnel ausgebildet. Die Oberseite des Tunnels wird durch einen Tunneldeckenträger gebildet, der aus einem Stangepressprofil gefertigt ist, und der fast mittig durch die Fahrgastzelle des Kraftfahrzeugs verläuft. Der Tunnellängsträger bildet zusätzlich zur Ebene der Bodentragstruktur eine zweite Ebene, über welche Kräfte von der Fronttragstruktur auf die Bodentragstruktur und die Hecktragstruktur übertragen werden können. Die Bodentragstruktur besteht im wesentlichen aus den die Außenseiten der Bodentragstruktur bildenden Schwellern, aus den den Tunnel begrenzenden Tunnelträgern und aus den die Schweller mit den Tunnelträgern verbindenden vorderen Längsträgern, die ebenfalls aus einem Stangenpressprofil gefertigt sind.

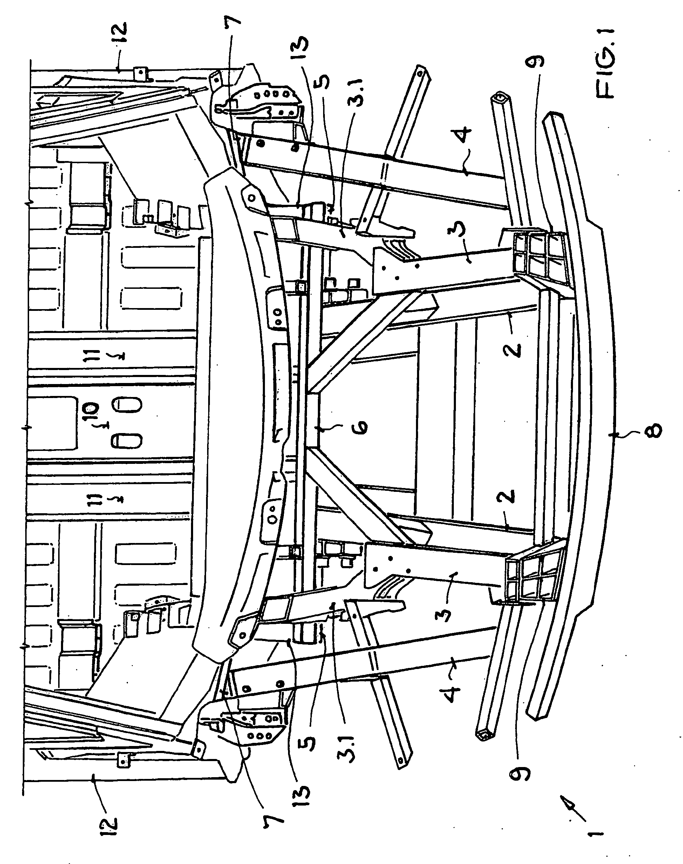

In der Figur 1 ist in einer Frontansicht die Fronttragstruktur des Sportwagens dargestellt, die von sechs durch Querträger und Vertikalträger miteinander verstrebten Frontlängsträger gebildet wird. Die sechs Frontlängsträger sind so angeordnet, dass zwischen ihnen ein Gepäckraum ausgebildet werden kann. Die sechs Frontlängsträger sind zur Absorption von Aufprallenergien ausgebildet, die beispielsweise bei einem Frontalzusammenstoß auf die Fronttragstruktur 1 einwirken, wobei die Frontlängsträger verformen und Faltenbeulen bilden.

Die vorderste Verstrebung der Fronttragstruktur wird von einem Querträger Stoßfänger 8 gebildet. An dem Querträger Stoßfänger 8 sind zwei Deformationskörper 9 angebracht, die sich im Fall eines Frontalzusammenstoßes verformen und Aufprallenergie absorbieren, bevor die Frontlängsträger der Fronttragstruktur 1 einen Schaden erleiden. An den Deformationskörpern 9 sind als Frontlängsträger zwei untere Frontlängsträger 2 und zwei ypsilonförmige Frontlängsträger 3 befestigt, an denen über weitere Querträger zur Montage von Motor und Karosserieteilen zwei äußere Frontlängsträger 4 befestigt sind.

Die Fahrgastzelle wird an ihrer Vorderseite von drei Querträgern begrenzt. Der untere der drei Querträger ist der Querträger Stirnwand 5, der aufgrund des Tunnels aus zwei Teilen besteht, wobei die inneren Enden der zwei Teile des Querträger Stirnwand 5 mit den Enden der Tunnelträger 11 der Bodentragstruktur verbunden sind. Der Mittlere der drei Querträger ist der Querträger Pedalerie 6, der mit dem Tunneldeckenträger 10 verbunden ist. Der obere der drei Querträger ist der Querträger Frontscheibe 7. Der Querträger Stirnwand 5, der Querträger Pedalerie 6 und der Querträger Frontscheibe 7 sind an beiden Seiten durch jeweils einen vertikalen Fußraumträger 13 miteinander verbunden. An die vertikalen Fußraumträger 13 schließen sich über die vorderen Längsträger die Schweller 12 der Bodentragstruktur an.

Die zwei unteren Frontlängsträger 2 sind mit dem Querträger Stirnwand 5 verbunden. Die zwei Enden aufweisende Seite des ypsilonförmigen Frontlängsträger 3 ist mit dem Querträger Pedalerie 6 verbunden. Die zwei äußeren Frontlängsträger 4 sind mit dem Querträger Frontscheibe 7 verbunden.

Der äußere Schenkel des mit dem Querträger Stirnwand 6 verbundenen ypsilonförmigen Frontlängsträger 3 ist als Gussteil ausgebildet und bildet den Längsträger Radhaus 3.1. Der Längsträger Radhaus 3.1 dient der Aufnahme eines Querlenkers der Radaufhängung des Kraftfahrzeugs.

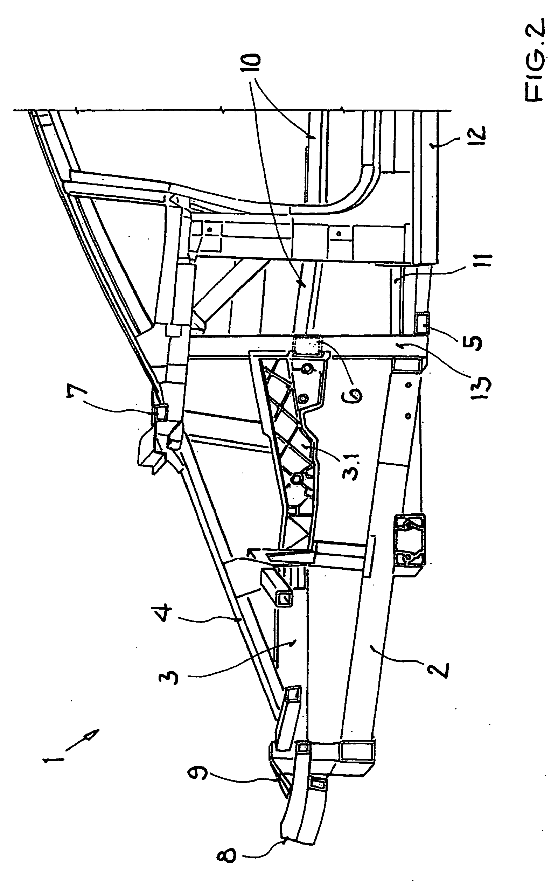

Figur 2 zeigt die Seitenansicht der Fronttragstruktur des eine Brennkraftmaschine im Heck aufweisenden Sportwagens. Dabei ist zu sehen, dass bei über die Fronttragstruktur auf die Bodentragstruktur eingeleitete Kräfte nahezu gradlinig von den unteren Frontlängsträgern 2 über den Querträger Stirnwand auf die tiefliegenden Längsträger und die Schweller der Bodentragstruktur übertragen werden. Von den ypsilonförmigen Frontlängsträgern 3 werden Kräfte ebenso über den Querträger Pedalerie auf den Tunneldeckenträger übertragen. Dadurch werden zwei Ebenen gebildet, die dem Fahrwerk des Sportwagens eine außerordentliche Steifigkeit verleihen.

Die mit zwei ypsilonförmigen und vier weiteren Frontlängsträgern ausgebildete Tragstruktur des Sportwagens weist im Fall eines Frontalzusammenstoßes eine hohe Energieabsorption auf. Im normalen Fahrbetrieb werden über die Fronttragstruktur eingeleitete Kräfte durch die zwei gebildeten Ebenen gleichmäßig auf die Bodentragstruktur und die Hecktragstruktur übertragen. Zudem kann zwischen den zwei untere Frontlängsträgern, den zwei ypsilonförmigen Frontlängsträgern und den zwei äußeren Frontlängsträgern ein volumenreicher Gepäckraum in die Fronttragstruktur integriert werden.

## Patentansprüche

1. Tragstruktur eines Kraftfahrzeugs aus einer Fronttragstruktur (1) und einer Bodentragstruktur, wobei die Fronttragstruktur (1) zwei ypsilonförmig ausgebildete Frontlängsträger (3) aufweist, und wobei zwischen der Fronttragstruktur (1) und der Bodentragstruktur ein Querträger Pedalerie (6) angeordnet ist, **dadurch gekennzeichnet, dass** die zwei Enden aufweisende Seite des ypsilonförmigen Frontlängsträgers (3) mit dem Querträger Pedalerie (6) verbunden ist.

2. Tragstruktur nach Anspruch 1, **dadurch gekennzeichnet, dass** der mit dem Querträger Pedalerie (6) verbundene, der Fahrzeugaußenseite zugewandte Teil der ypsilonförmigen Frontlängsträger (3) den Längsträger Radhaus (3.1) bildet, dass der Längsträger Radhaus (3.1) zur Befestigung eines Querlenkers der Radaufhängung des Kraftfahrzeugs ausgebildet ist.

3. Tragstruktur nach Anspruch 1 oder 2, **dadurch gekennzeichnet, dass** der Längsträger Radhaus (3.1) als Gussteil ausgebildet ist.

4. Tragstruktur nach einem der Ansprüche 1 bis 3, **dadurch gekennzeichnet, dass** als weitere Querträger zwischen der Fronttragstruktur (1) und der Bodentragstruktur des Kraftfahrzeugs ein Querträger Stirnwand (5) und ein Querträger Frontscheibe (7) ausgebildet sind, und dass der Querträger Stirnwand (5), der Querträger Pedalerie (6) und der Querträger Frontscheibe (7) an beiden Seiten des Kraftfahrzeugs durch die zwei vertikale Fußraumträger (13) miteinander verbunden sind.

5. Tragstruktur nach Anspruch 4, **dadurch gekennzeichnet, dass** die Fronttragstruktur (1) zwei untere Frontlängsträger (2), die zwei ypsilonförmige Frontlängsträger (3) und zwei äußere Frontlängsträger (4) aufweist, und dass die zwei untere Frontlängsträger (2) mit dem Querträger Stirnwand (5) verbunden sind, und dass die zwei äußeren Frontlängsträger (4) mit dem Querträger Frontscheibe (7) verbunden sind.

6. Tragstruktur nach Anspruch 4 oder 5, **dadurch gekennzeichnet, dass** die Bodentragstruktur (1) aus einem Tunnel, zwei Schwellern (12), den zwei vorderen Längsträgern und zwei hinteren Querträgern aufgebaut ist, dass der Tunnel aus einem Tunneldeckenträger (10), zwei Tunnelträgern (11) und zwei Tunnelschließblechen aufgebaut ist, und dass der Tunneldeckenträger (10) mit dem Querträger Pedalerie (6) verbunden ist, und dass die Tunnelträger (11) und die zwei vorderen Längsträger miteinander und mit dem Querträger Stirnwand (5) verbunden sind.

7. Tragstruktur nach einem der vorangegangenen Ansprüche, **dadurch gekennzeichnet, dass** die Brennkraftmaschine als Sportwagen ausgebildet ist, dass die Brennkraftmaschine im Heck des Sportwagens angeordnet ist und dass das Fahrwerk des Sportwagen als Allradantrieb ausgebildet ist.

8. Tragstruktur nach einem der vorangegangenen Ansprüche, **dadurch gekennzeichnet, dass** die Tragstruktur des Kraftfahrzeugs aus Leichtmetall hergestellt ist.

## Claims

1. Carrier structure of a motor vehicle, comprising a front carrier structure (1) and a base carrier structure, wherein the front carrier structure (1) has two Y-shaped front longitudinal carriers (3) and wherein a cross member pedal assembly (6) is arranged between the front carrier structure (1) and the base carrier structure, **characterised in that** the side of the Y-shaped front longitudinal carrier (3) which has two ends is connected to the cross member pedal assembly (6).

2. Carrier structure according to claim 1, **characterised in that** the part of the Y-shaped front longitudinal carrier (3) connected to the cross member pedal assembly (6) and facing towards the vehicle outer side comprises the longitudinal carrier wheel housing (3.1), and that the longitudinal carrier wheel housing (3.1) is configured for fastening a control arm of the wheel suspension of the motor vehicle.

3. Carrier structure according to claim 1 or 2, **characterised in that** the longitudinal carrier wheel housing (3.1) is configured as a cast part.

4. Carrier structure according to one of the claims 1 to 3, **characterised in that** a cross member bulkhead (5) and a cross member windscreen (7) are formed as further cross members between the front carrier structure (1) and the base carrier structure of the motor vehicle, and that the cross member bulkhead (5), the cross member pedal assembly (6) and the cross member windscreen (7) are connected to one another at both sides of the motor vehicle by two vertical foot well carriers (13).

5. Carrier structure according to claim 4, **characterised in that** the front carrier structure (1) comprises two lower front longitudinal carriers (2), two Y-shaped front longitudinal carriers (3) and two outer front longitudinal carriers (4), and that the two lower front longitudinal carriers (2) are connected to the cross member bulkhead (5) and that the two outer front longitudinal carriers (4) are connected to the cross member windscreen (7).

6. Carrier structure according to claim 4 or 5, **characterised in that** the base carrier structure (1) is formed from a tunnel, two sillboards (12), the two front longitudinal carriers and two rear cross members, that the tunnel comprises a tunnel roof support (10), two tunnel supports (11) and two tunnel end plates, and that the tunnel roof support (10) is connected to the cross member pedal assembly (6) and that the tunnel supports (11) and the two front longitudinal carriers are connected to one another and to the cross member bulkhead (5).

7. Carrier structure according to one of the preceding claims, **characterised in that** the internal combustion engine is configured as a sports car engine, that the internal combustion engine is arranged in the rear of the sports car and that the running gear of the sports car is configured for four wheel drive.

8. Carrier structure according to one of the preceding claims, **characterised in that** the carrier structure of the motor vehicle is made from light metal.

## Revendications

1. Structure porteuse d'un véhicule automobile composée d'une structure porteuse avant (1) et d'une structure porteuse de fond, la structure porteuse avant (1) présentant deux longerons avant (3) réalisés en forme d'upsilon, et entre la structure porteuse avant (1) et la structure porteuse de fond étant disposée une traverse de pédalerie (6), **caractérisée en ce que** le côté présentant deux extrémités du longeron avant (3) en forme d'upsilon est relié à la traverse de pédalerie (6).

2. Structure porteuse selon la revendication 1, **caractérisée en ce que** la partie des longerons avant (3) en forme d'upsilon dirigée vers le côté externe du véhicule, reliée à la traverse de pédalerie (6) forme le longeron de passage de roue (3.1), le longeron de passage de roue (3.1) étant réalisé pour la fixation d'un bras oscillant transversal de la suspension de roue du véhicule automobile.

3. Structure porteuse selon la revendication 1 ou 2, **caractérisée en ce que** le longeron de passage de roue (3.1) est réalisé sous forme de pièce moulée.

4. Structure porteuse selon l'une quelconque des revendications 1 à 3, **caractérisée en ce que**, en tant qu'autre traverse entre la structure porteuse avant (1) et la structure porteuse de fond du véhicule automobile sont réalisées une traverse de paroi frontale (5) et une traverse de pare-brise (7), et **en ce que** la traverse de paroi frontale (5), la traverse de pédalerie (6) et la traverse de pare-brise (7) sont reliées sur les deux côtés du véhicule automobile par les deux porteurs verticaux de l'espace pour les pieds (13).

5. Structure porteuse selon la revendication 4, **caractérisée en ce que** la structure porteuse avant (1) présente deux longerons avant (2) inférieurs, les deux longerons avant (3) en forme d'upsilon et deux longerons avant (4) externes, et **en ce que** les deux longerons avant (2) inférieurs sont reliés à la traverse de paroi frontale (5), et **en ce que** les deux longerons avant (4) externes sont reliés à la traverse de pare-brise (7).

6. Structure porteuse selon la revendication 4 ou 5, **caractérisée en ce que** la structure porteuse de fond (1) est constituée d'un tunnel, de deux seuils (12), de deux longerons avant et de deux traverses arrière, **en ce que** le tunnel est constitué d'un porteur de plafond de tunnel (10), de deux porteurs de tunnel (11) et de deux tôles de fermeture de tunnel, et **en ce que** le porteur de plafond de tunnel (10) est relié à la traverse de pédalerie (6), et **en ce que** le porteur de tunnel (11) et les deux longerons avant sont reliés entre eux et sont reliés à la traverse de pare-brise (5).

7. Structure porteuse selon l'une quelconque des revendications précédentes, **caractérisée en ce que** le moteur à combustion interne est réalisé comme une voiture de sport, **en ce que** le moteur à combustion interne est disposé à l'arrière de la voiture de sport et **en ce que** le châssis de la voiture de sport est réalisé comme une traction intégrale.

8. Structure porteuse selon l'une quelconque des revendications précédentes, **caractérisée en ce que** la structure porteuse du véhicule automobile est fabriquée en métal léger.
